# EUROPÄISCHE PATENTANMELDUNG

(11) **EP 2 453 138 A2**
(43) Veröffentlichungstag der Anmeldung: **16.05.2012**
(21) Anmeldenummer: 11009011.5
(22) Anmeldetag: 12.11.2011
(51) Int. Cl.: F04D 25/06, F04D 29/66, G01M 1/32

(54) **Diagonalventilator**

(30) Priorität: 14.11.2010 DE 202010015749 U
(71) Anmelder: ebm-papst St. Georgen GmbH & Co. KG, 78112 St. Georgen (DE)
(72) Erfinder: Schmid, Harald, 78576 Emmingen-Liptingen (DE); Maier, Tobias, 78628 Rottweil (DE); Müller, Martin, 72297 Seewald (DE); Weiss, Matthias, 74246 Eberstadt (DE)
(74) Vertreter: Raible, Tobias

(57) **Zusammenfassung**

Ein Diagonalventilator weist auf:
Einen Luftkanal (50), der einen Lufteinlass (44) und einen Luftauslass (52) sowie eine äußere Wand (48) und eine innere Wand (56) aufweist;
einen Außenläufermotor (75) mit einem Innenstator (100) und einem Außenrotor (72); ein Laufrad (43), das mit Flügeln (58) versehen ist, welche an einer mit dem Außenrotor (72) in Antriebsverbindung stehenden Tragestruktur (54) angeordnet sind, welch letztere die innere Wand (56) des Luftkanals (50) bildet, in welchen Luftkanal (50) sich die Flügel (58) des Laufrads (43) erstrecken;
erste Auswuchttaschen (62), welche von der Druckseite (52) des Laufrads (43) zugänglich sind und auf der Innenseite des Laufrads (43) in einer ersten Ebene (P1) angeordnet sind;
und zweite Auswuchttaschen (76), welche auf der Innenseite des Laufrads (43) in einer zweiten Ebene (P2) angeordnet sind und ebenfalls von der Druckseite (52) des Laufrads (43) zugänglich sind,
wobei die erste Ebene (P1) näher zum Luftauslass (52) angeordnet ist als die zweite Ebene (P2).

## Beschreibung

Die Erfindung betrifft einen Diagonalventilator. Ein solcher ist bekannt aus der DE 41 27 134 B4. Er hat ein Gehäuse, welches, zusammen mit dem Lüfterrad des Diagonalventilators, einen Luftströmungskanal bildet, in welchem sich die am Lüfterrad vorgesehenen Lüfterflügel drehen. Das Lüfterrad wird auch als Laufrad bezeichnet.

Die Hüllkurve des Lüfterrades hat z.B. die Form eines Kegelstumpfes oder die Form einer Kugelkalotte. Falls der Antriebsmotor ein Außenläufermotor ist, ist die Nabe des Lüfterrads mit dem Außenrotor dieses Motors drehfest verbunden. Dabei bleibt zwischen der Außenseite des Außenrotors und der Außenseite des Lüfterrads ein ringförmiger Hohlraum, an dessen Peripherie Wuchttaschen vorgesehen sind.

Es ist eine Aufgabe der Erfindung, einen neuen Diagonalventilator bereit zu stellen.

Nach der Erfindung wird diese Aufgabe gelöst durch den Gegenstand des Anspruchs 1. Das rohrförmige ferromagnetische Rückschlussteil hat einerseits eine magnetische Funktion für den Motor, und es bildet andererseits eine Art Rückgrat für das Laufrad, wobei sich diese Funktionen gegenseitig nicht stören. Gleichzeitig wirkt dieses Teil auch als Kühlelement für den Motor, welches Wärme nach außen leitet und dadurch der Bildung von Wärmenestern im Inneren des Laufrads entgegen wirkt.

Eine andere Lösung der gestellten Aufgabe ist Gegenstand der Ansprüche 12 bis 19. Dadurch, dass in dem ringförmigen Hohlraum einerseits Rippen vorgesehen sind, die sich dort von innen nach außen erstrecken, und andererseits mindestens eine in Umfangsrichtung verlaufende Rippe vorgesehen ist, welche mindestens einen Teil der von innen nach außen verlaufenden Rippen zu einer Art Rippengewölbe (ribbed vault) verbindet, z.B. nach Art eines Netzgewölbes (reticulated vault), erhält man zwischen den Rippen viele kleine Taschen, welche - im Gegensatz zu großen Taschen - keine starken Wirbel verursachen. Starke Wirbel würden nämlich das Lüfterrad bremsen und dadurch eine erhebliche Verlustleistung verursachen, welche die Lüfterleistung herabsetzen und bewirken würde, dass der Außenläufermotor und seine Elektronik schon bei niedrigen Drehzahlen ihre Leistungsobergrenze erreichen, so dass die Lüfterleistung gering wäre.

Bei einem solchen Diagonalventilator kann das verbesserte Lüfterrad mit geringem Aufwand hergestellt werden, z.B. als Spritzgussteil, und es muss nach seiner Verbindung mit dem Rotor des Außenläufermotors nur noch ausgewuchtet werden, was hier besonders einfach ist, da die Auswuchttaschen für beide Wuchtebenen von der Druckseite des Lüfterrades her erreichbar sind.

Eine weitere Lösung der gestellten Aufgabe ist Gegenstand der Ansprüche 20 bis 24. Durch diese Gestaltung wird die Montage des Lüfters wesentlich erleichtert, denn das Einführen des topfartigen ferromagnetischen Rückschlussteils in das rohrförmige ferromagnetische Rückschlussteil erfordert manchmal erhebliche Kräfte, die zu einer Beschädigung des Laufrads führen könnten, und weil das rohrförmige ferromagnetische Rückschlussteil von der Außenseite des Laufrads zugänglich ist, kann er direkt von der Außenseite des Laufrads her abgestützt werden, so dass bei dieser Ausgestaltung beim Zusammenbau keine mechanischen Kräfte auf das Laufrad ausgeübt werden und folglich eine Beschädigung des Laufrads sicher vermieden wird.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine raumbildliche Darstellung einer bevorzugten Ausführungsform eines Diagonalventilators,
- Fig. 2: eine Darstellung von Teilen des Lüfters in Explosionsdarstellung,
- Fig. 3: eine Draufsicht auf die Oberseite des Rotors und des auf dem Rotor befestigten Laufrads, beim Diagonalventilator der Fig. 1, gesehen in Richtung des Pfeiles III der Fig. 1,
- Fig. 4: eine Draufsicht auf die Unterseite des Rotors und des Laufrads des Ventilators der Fig. 3, sowie das dort vorgesehene netzartige Rippengewölbe,
- Fig. 5: einen stark vergrößerten Ausschnitt aus Fig. 4,
- Fig. 6: eine raumbildliche Darstellung des Rippengewölbes der Fig. 4 und 5
- Fig. 7: einen vergrößerten Ausschnitt aus Fig. 6,
- Fig. 8: eine raumbildliche Darstellung analog Fig. 7,
- Fig. 9: eine raumbildliche Darstellung analog Fig. 6,
- Fig. 10: einen Längsschnitt durch den Rohling eines Laufrads im Zustand vor seiner Montage, nach einer bevorzugten Ausführungsform der Erfindung, gesehen längs der Linie X-X der Fig. 3,
- Fig. 11: einen Längsschnitt analog Fig. 10 beim Einpressen des Außenrotors in das Laufrad,

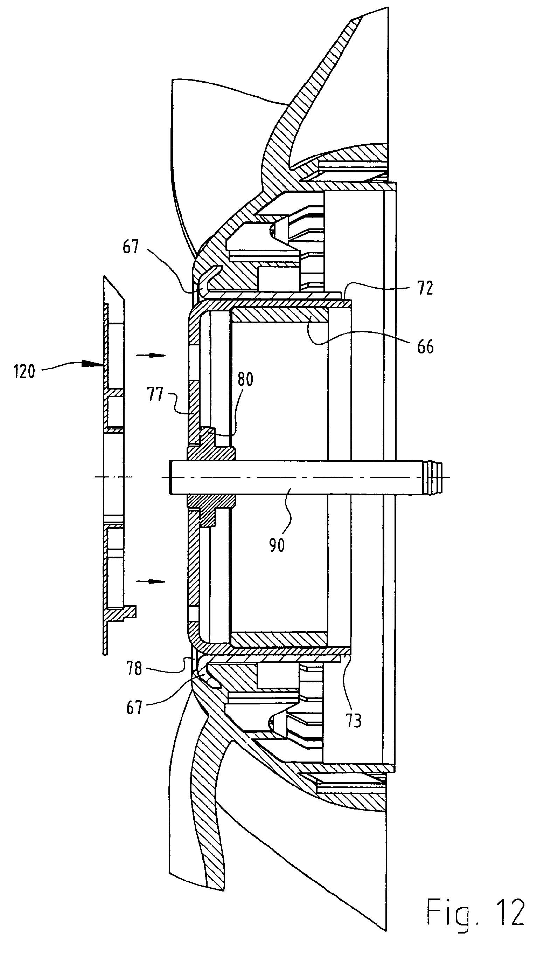

- Fig. 12: eine Darstellung des Laufrads nach dem Einpressen des Außenrotors, aber vor der Montage eines Radiallüfterrads, dessen Funktion es ist, Kühlluft durch den Antriebsmotor des Diagonalventilators anzusaugen,
- Fig. 13: einen Längsschnitt durch eine erste Variante des Laufrads, und
- Fig. 14: einen Längsschnitt durch eine zweite Variante des Laufrads.

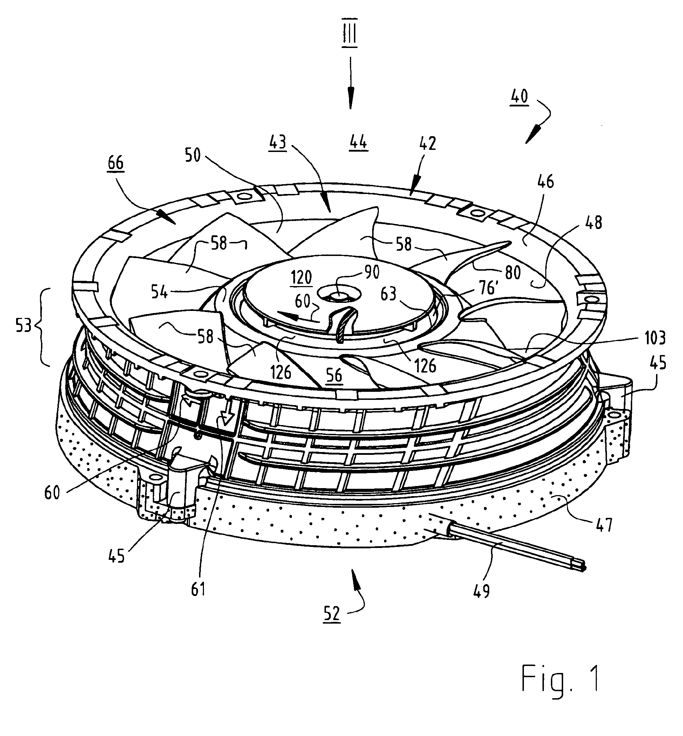

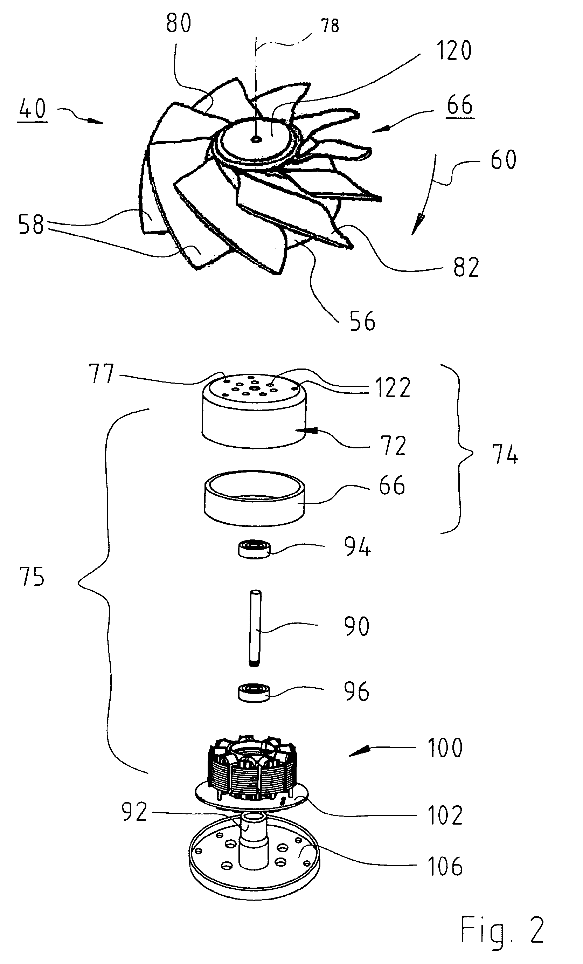

Fig. 1 zeigt eine perspektivische Darstellung eines Diagonallüfters 40, und Fig. 2 zeigt Teile eines solchen Lüfters in einer schematischen Explosionsdarstellung, um das Verständnis zu erleichtern.

Der Lüfter 40 hat ein Gehäuse 42, in welchem ein Lüfterrotor 43 angeordnet ist, der gewöhnlich als Laufrad bezeichnet wird. Auf der Einlassseite 44 ist im Gehäuse 42 ein Kunststoffteil 46 montiert. Dieses bildet die Außenwand eines Luftkanals 50, der sich vom Einlass 44 nach Art eines Hohlkegelstumpfs bis zu einem Auslass 52 erstreckt. Das Gehäuse 42 hat ein Oberteil 53, das über Verbindungselemente 45 mit einem Basisteil 47 verbunden ist, durch das sich eine elektrische Anschlussleitung 49 nach außen erstreckt. Das Basisteil 47 ist grau hervorgehoben.

Die Innenwand des Luftkanals 50 wird gebildet von der etwa kuppel- oder kugelkalottenförmigen Außenseite 56 des Lüfterrotors 43 (Fig. 2). An dieser Außenseite 56 sind Lüfterflügel 58 befestigt. Diese drehen sich in Richtung eines Pfeils 60, also bezogen auf Fig. 1 und Fig. 2 im Uhrzeigersinn. Die Strömungsrichtung der Luft ist durch einen Pfeil 61 angedeutet, geht also in Fig. 1 von oben nach unten.

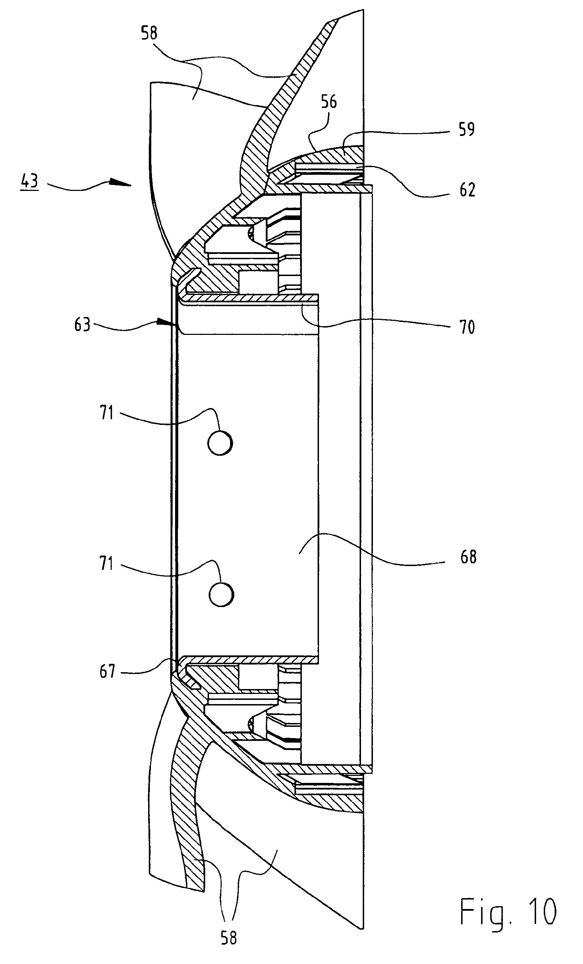

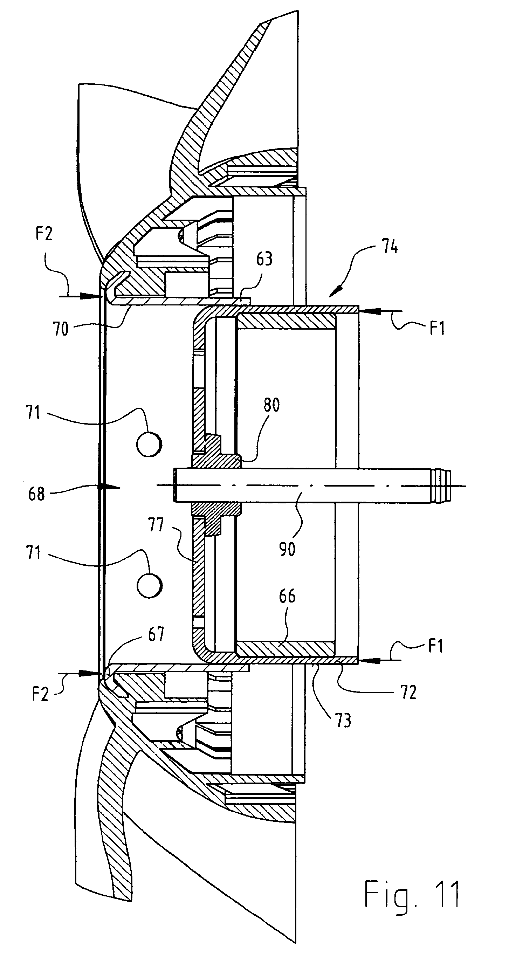

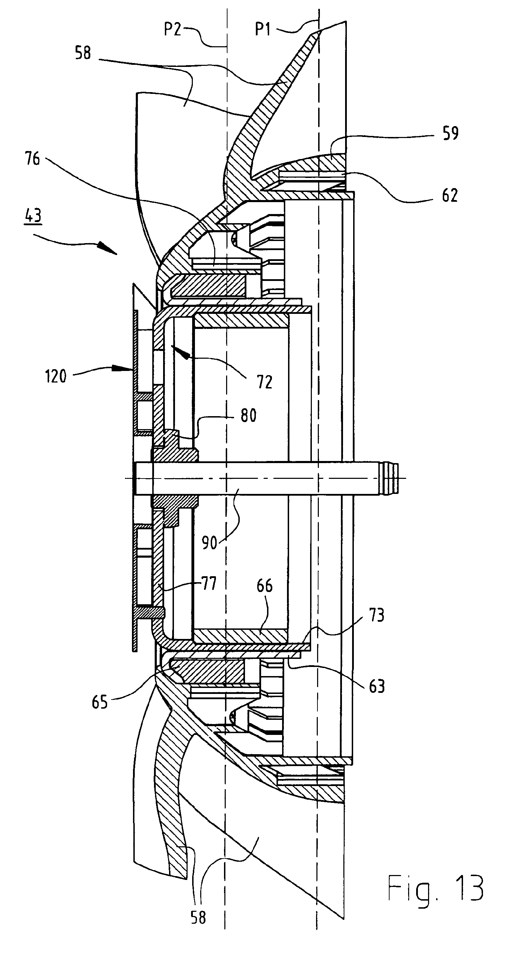

Der Lüfterrotor 43 hat in Fig. 10 und Fig. 11 unten einen etwa zylindrischen Abschnitt 59, auf dessen Innenseite Auswuchttaschen 62 für eine erste Auswuchtebene P1 (Fig. 13) vorgesehen sind. In diesen Taschen 62 werden beim Auswuchtvorgang so genannte Auswuchtgewichte (nicht dargestellt) befestigt, wie dem Fachmann bekannt ist. Alternativ können zur Auswuchtung auch andere Methoden verwendet werden.

Die Flügel 58 sind bevorzugt überlappend ausgebildet. Zusammen mit dem Lüfterrotor 43 bilden sie das Laufrad des Lüfters 40. Das Laufrad wird bevorzugt durch Kunststoffguss hergestellt. In ihm ist ein Abschnitt eines rohrförmigen Rückschlussteils 63 aus ferromagnetischem Werkstoff befestigt, das sich fast bis zur Oberseite des Laufrads 43 erstreckt. Das Teil 63 ist Teil des magnetischen Rückschlusses für einen Rotormagneten 66, der in Fig. 2 dargestellt ist.

An seinem in Fig. 10 äußeren (linken) Ende ist das rohrförmige Teil 63 zu einem nach außen ragenden Flansch oder Rand 67 verformt, der in das Laufrad 43 z. B. eingegossen und dadurch in diesem verankert ist.

Das rohrförmige Teil 63 wird auch als Ronde bezeichnet. Es bildet auf seiner Innenseite einen Hohlraum 68 mit einer Wand 70. Auf der Wand 70 sind flache Erhöhungen 71 vorgesehen, die z. B. eine Höhe von etwa 0,1 bis etwa 0,3 mm und einen Durchmesser von z. B. 5 mm haben können. Meistens genügen etwa sechs Erhöhungen 71, die in Fig. 10 im Bereich des linken Endes des Teils 63 angeordnet und gleichmäßig am Umfang des Teils 63 verteilt sind.

Wie Fig. 11 zeigt, wird der topfartige magnetische Rückschluss 72 eines Außenrotors 74 von rechts in den Hohlraum 68 im Inneren des rohrförmigen Teils 63 eingepresst. Dazu dient eine Einpresskraft F1, die durch ein geeignetes (nicht dargestelltes) Hilfswerkzeug auf den topfartigen Rückschluss 72 aufgebracht wird.

Damit ein Einpressen möglich ist, wird das rohrförmige Teil 63 mittels einer Gegenkraft F2 abgestützt, die an dem nach außen ragenden Rand 67 des Teils 63 angreift. Deshalb liegt dieser Rand 67 nicht im Inneren des Laufrads 63, ist also nicht in dieses eingegossen, so dass ein (nicht dargestellter) Gegenhalter an diesem Rand 67 angreifen und die Gegenkraft F2 auf das Teil 63 ausüben kann.

Aus diesem Grund hat das Laufrad 43 an seiner in Fig. 1 oberen Seite 44 eine ringförmige Öffnung 76', durch die ein direkter Zugang zum Rand 67 möglich ist. Ggf. kann diese ringförmige Öffnung 76' auch in Form einer Mehrzahl von kürzeren Öffnungen ausgebildet sein, durch welche entsprechende Teile eines Gegenhalters durchgeführt werden können.

Beim Einpressen des Außenrotors 74 wird hauptsächlich dessen Außenseite 73 in die flachen Erhöhungen 71 eingepresst und dadurch sicher mit dem rohrförmigen Teil 63 verbunden. Im Inneren des topfartigen Teils 72 ist der Rotormagnet in geeigneter Weise befestigt.

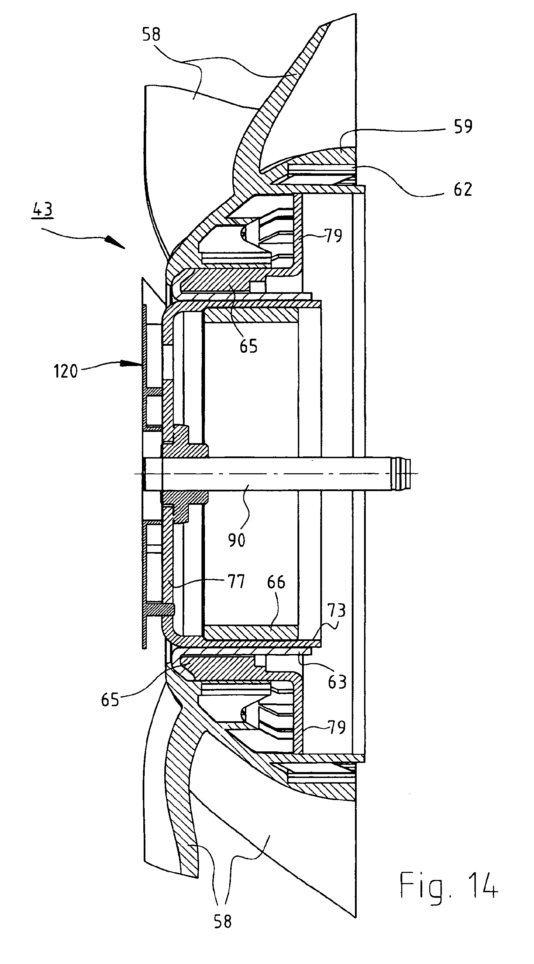

Die Fig. 13 und Fig. 14 zeigen Varianten des Laufrads 43, die sich besonders gut für Versuchsmuster eignen. Das rohrförmige Teil 63 ist bei Fig. 13 mittels eines eingepressten oder eingeklebten Kunststoffrings 65 im Laufrad 43 befestigt. Der Ring 65 ist zwischen das Teil 63 und die Innenwand des Laufrads 43 eingepresst oder eingeklebt und liegt mit seinem in Fig. 13 und Fig. 14 linken Ende gegen den Rand 67 von innen an.

In Fig. 14 hat der Kunststoffring 65 noch einen flanschartigen Fortsatz 79, der die hohle Innenseite des Laufrads 43 abdeckt und so Verluste durch Luftverwirbelung reduziert.

Der Boden des Rückschlussteils 72 ist mit 77 bezeichnet. An ihm ist mittels einer Schweißbuchse 80 eine Welle 90 befestigt, vgl. auch Fig. 2.

Dadurch werden Wärmedehnungen des rohrförmigen Teils 63 und des Rotors 43 unabhängig voneinander möglich.

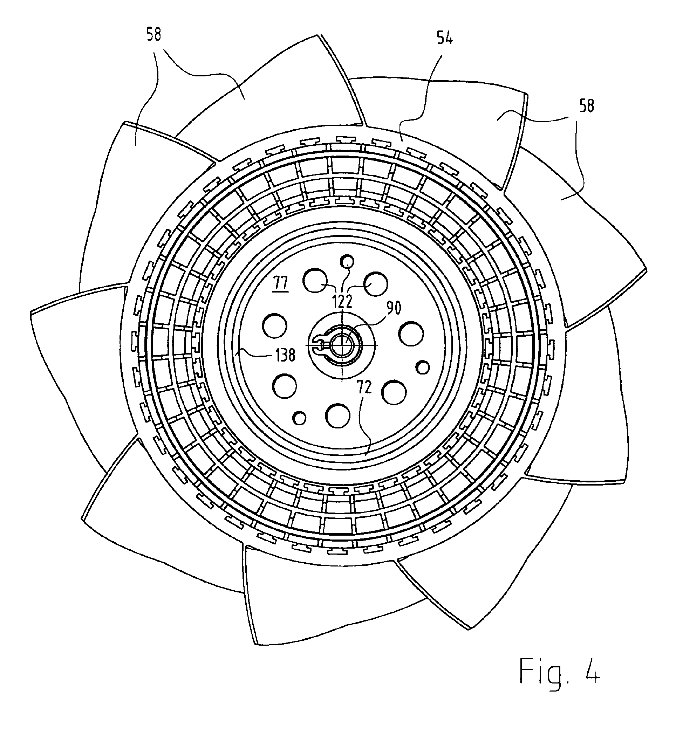

In das rohrförmige Teil 63 ist ein topfartiges Rückschlussteil 72 aus ferromagnetischem Werkstoff eingepresst, das in Fig. 2 dargestellt ist. Es hat eine etwa zylindrische Wand 73, und sein Boden ist mit 77 bezeichnet, vgl. Fig. 4. An der Innenwand des Teils 72 ist der Rotormagnet 66 angeordnet, vgl. Fig. 2, Fig. 4, Fig. 10 und Fig. 11. Er ist bevorzugt radial magnetisiert. Seine Polzahl kann je nach den Erfordernissen z.B. 2, 4, 6, 8, 10 etc. Pole betragen. Zum Antrieb des Lüfterrotors 43 kann prinzipiell jede Art von Elektromotor verwendet werden, doch hat sich die dargestellte und beschriebene kompakte Form als besonders vorteilhaft erwiesen.

Das Laufrad 43 hat in Fig. 10 rechts einen etwa zylindrischen Abschnitt 59, auf dessen Innenseite Auswuchttaschen 62 für eine erste Auswuchtebene P1 (Fig. 13) vorgesehen sind. In diese Taschen 62 werden beim Auswuchtvorgang so genannte Auswuchtgewichte (nicht dargestellt) eingesteckt.

Die Flügel 58 sind bevorzugt überlappend ausgebildet. Zusammen mit der Tragestruktur 54 bilden sie das Laufrad 43 des Lüfters 40. Das Laufrad 43 wird bevorzugt durch Kunststoffguss hergestellt und kann ggf. auch aus einer Mehrzahl von Teilen zusammengesetzt sein, z. B. durch Teilung in axialer Richtung.

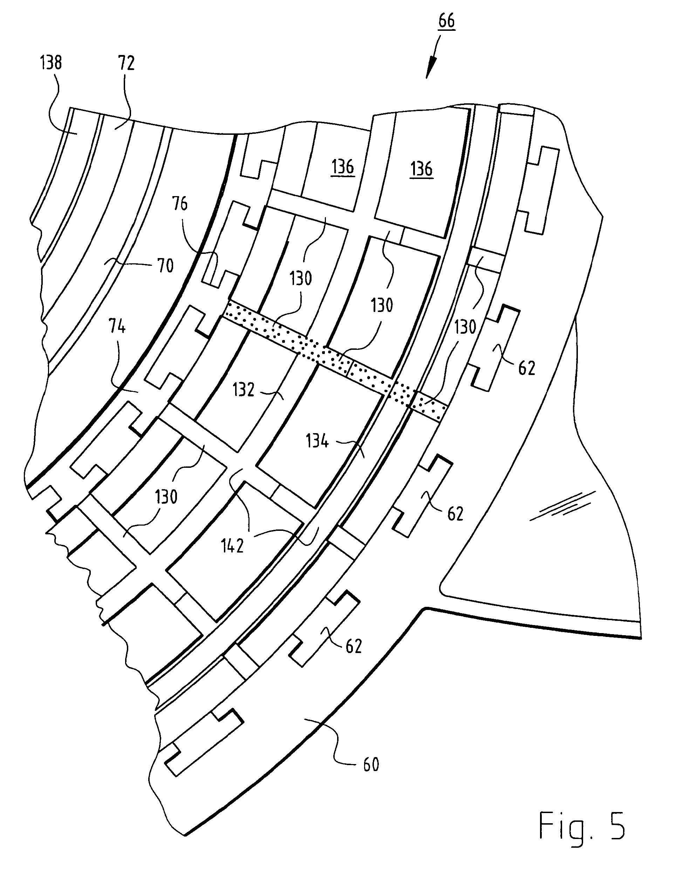

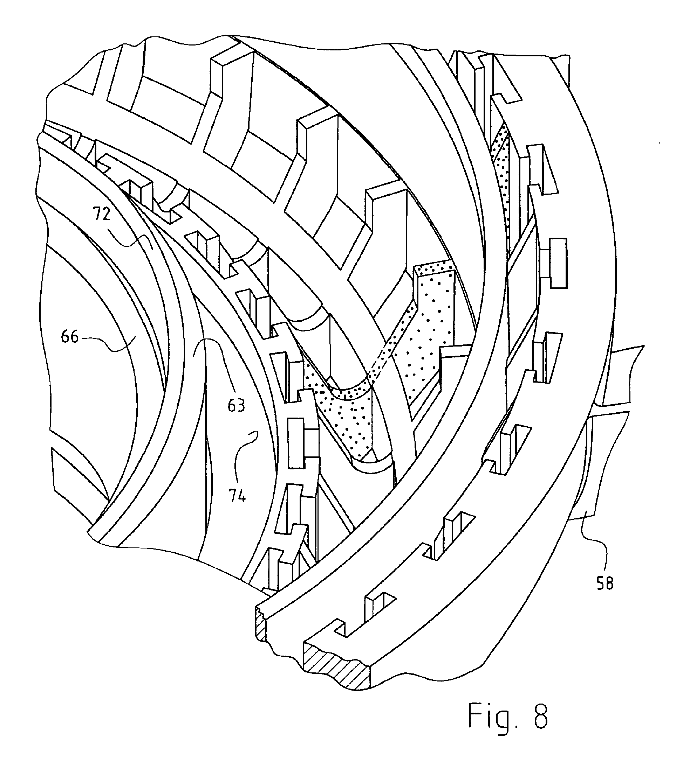

Auf seiner Innenseite hat das Laufrad 43 einen zylindrischen Fortsatz 70, vgl. Fig. 5, der zur Befestigung des topfartigen magnetischen Rückschlusses 72 (Fig. 2) dient. Dieser zylindrische Fortsatz 70 geht über ein ringförmiges Verbindungsteil 74 in die Tragestruktur des Laufrads 43 über, vgl. Fig. 8.

in dem Verbindungsteil 74 sind Wuchttaschen 76 (Fig. 4 und Fig. 5) in einer zweiten Auswuchtebene P2 (Fig. 13) vorgesehen, welche einen axialen Abstand und einen radialen Abstand von den Taschen 62 haben. Sie ermöglichen von der gleichen Seite des Laufrads 43 aus ein Auswuchten in zwei Ebenen. Die beiden Auswuchtebenen P1, P2 sind bevorzugt parallel zueinander und senkrecht zur Rotorachse 78.

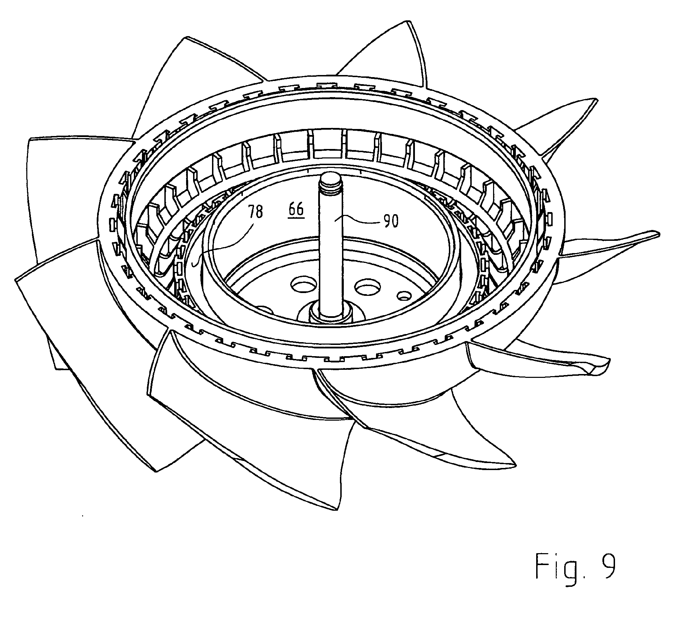

Ein solcher Aufbau des Lüfters 40 ermöglicht also das Auswuchten des Laufrads 43 von einer einzigen Seite, nämlich der in Fig. 5 bis Fig. 9 oberen Seite, so dass auf der Außenseite 56 (Fig. 10) des Laufrads 43 keine Auswuchttaschen vorgesehen werden müssen. Dies ermöglicht eine optimale Gestaltung des Laufrads 43 und seiner Lüfterflügel 58, deren radial innere Enden näher bei der Drehachse 78 (Fig. 2) des Laufrads 43 liegen können, was Geräuschvorteile mit sich bringt, d.h. die so genannte Anbindungsfläche der Lüfterflügel 58 auf dem Laufrad 43 kann hier besonders groß sein, was auch den aerodynamischen Wirkungsgrad verbessert.

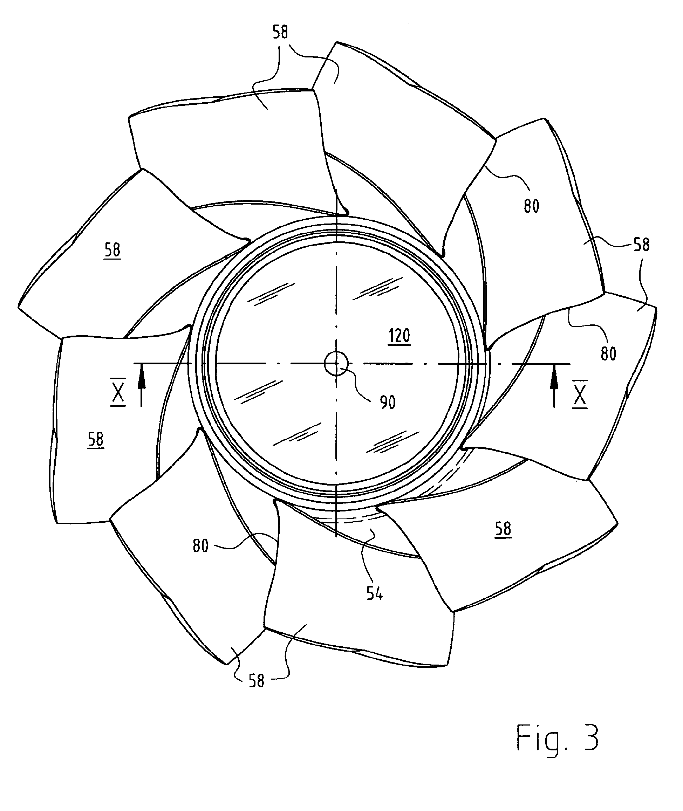

Auch können die Lüfterflügel 58 an ihrem Einlauf ein S-Profil 80 (Fig. 3) haben, und sie können Einbuchtungen 82 (Fig. 2) haben, was ebenfalls zur Reduzierung der Lüftergeräusche beiträgt.

Wie die Fig. 4 bis Fig. 9 zeigen, sind zwischen dem zylindrischen Fortsatz 70 und dem zylindrischen Abschnitt 60 Rippen 83 vorgesehen. Dies ermöglicht die Verwendung eines kleinen Luftspalts zwischen der Wand 48 des Luftkanals 50 und den äußeren Enden der Flügel 58, vgl. Fig. 1.

Der Lüfter 40 wird von dem elektronisch kommutierten Außenläufermotor (ECM) 75 angetrieben. Der magnetische Rückschluss 72 des Rotors ist, wie beschrieben, mit dem zylindrischen Fortsatz 70 des Verbindungsteils 74 verbunden. Er steht seinerseits mit einer Welle 90 in Antriebsverbindung, die in einem Lagerrohr 92 gelagert ist, hier mittels zwei Kugellagern 94, 96, die mittels einer (nicht dargestellten) Druckfeder gegeneinander verspannt sind. Der magnetische Rückschluss 72 dreht sich im Betrieb um die Längsachse 78.

Der Motor 75 hat einen Innenstator 100, der auf der Außenseite des Lagerrohres 92 befestigt ist. Unterhalb des Innenstators 100 befindet sich hier eine Leiterplatte 102, auf der elektronische Bauelemente für den Motor 75 angeordnet sein können. Das Lagerrohr 92 ist mit einer Flanschplatte 106 verbunden, die ihrerseits mit dem Außengehäuse 42 in geeigneter Weise verbunden ist, gewöhnlich durch Stege 103, von denen einer in Fig. 1 sichtbar ist.

In der Praxis können Lagerrohr 92, Stege 103, Flansch 106 und Lüftergehäuse 42 als einstückiges Aluminium-Druckgussteil oder als einstückiges Kunststoffteil ausgeführt werden. Auch eine mehrteilige Ausführung ist möglich.

Da der Außenläufermotor 75 im Inneren des Laufrads 43 angeordnet ist, wird er relativ schlecht gekühlt. Deshalb ist bevorzugt oberhalb des Motors 75 eine zusätzliche Lüfteranordnung 120 nach Art einer Scheibe vorgesehen, die hier direkt von der Welle 90 angetrieben wird. Sie sitzt direkt auf dem Außenrotor 72 und saugt Luft durch Öffnungen 122 an, die dort vorgesehen sind, vgl. Fig. 2.

Diese Luft durchströmt zuerst den Motor 75 und kühlt ihn. Im Betrieb hat der Diagonallüfter 40 der Fig. 1 oben einen ersten niedrigeren Druck und unten einen höheren zweiten Druck, welche die Luft nach oben durch den Motor 75 presst und ihn dadurch kühlt.

Vom Motor 75 strömt die Kühlluft durch die Öffnungen 122 des becherförmigen Teils 72 zur Luftscheibe 120, die als Radialventilatorrad ausgebildet ist. Sie unterstützt die Wirkung des zweiten Drucks und saugt Luft durch die Öffnungen 122.

Die Luftscheibe 120 kann entweder am Laufrad 66 bei dessen Herstellung direkt hergestellt werden, z.B. durch Spritzguss, oder sie kann am Laufrad 66 befestigt werden. Von der Luftscheibe 120 wird die Kühlluft radial durch Austrittsöffnungen 126 (Fig. 1) ausgeblasen.

Der Diagonalventilator 40 hat auf seiner Lufteintrittsseite 44 im Bereich der Scheibe 120 einen niedrigen Druck, der gewöhnlich etwas niedriger ist als der erste Druck, da dort die Luft zur Eintrittsöffnung 44 angesaugt wird. Diese angesaugte Luft strömt über die Austrittsöffnungen 126 und erzeugt dort durch den Venturieffekt einen zusätzlichen Unterdruck, der die Strömung der Kühlluft durch den Motor 75 verstärkt und dadurch dessen Kühlung weiter verbessert. Auch der durch den Lüfter selbst erzeugte Druck auf der Ausblasseite 52 verstärkt den Kühleffekt zusätzlich.

Wie die Fig. 4 bis Fig. 9 zeigen, erstrecken sich vom inneren Fortsatz 70 erste Rippen 130 nach außen zum Teil 60. Die Rippen 130 verlaufen hier jeweils von einem Abschnitt zwischen zwei inneren Auswuchttaschen 76 durch den Hohlraum 144 zu einem etwa gegenüber liegenden Abschnitt zwischen zwei äußeren Auswuchttaschen 62. In Fig. 5 ist eine der Rippen 130 grau hervorgehoben.

Etwa senkrecht zu den ersten Rippen 130 verlaufen hier in Umfangsrichtung zweite Rippen 132, 134, welche mit den ersten Rippen 130 eine Art Netzgewölbe bilden und an den Kreuzungspunkten 142 mit diesen verbunden sind. Die ersten Rippen 130 und die zweiten Rippen 132, 134 bilden miteinander kleine Hohlräume 136, welche im Betrieb des Lüfters 40 keine erhebliche Wirbelbildung und daher keine großen Verluste verursachen können.

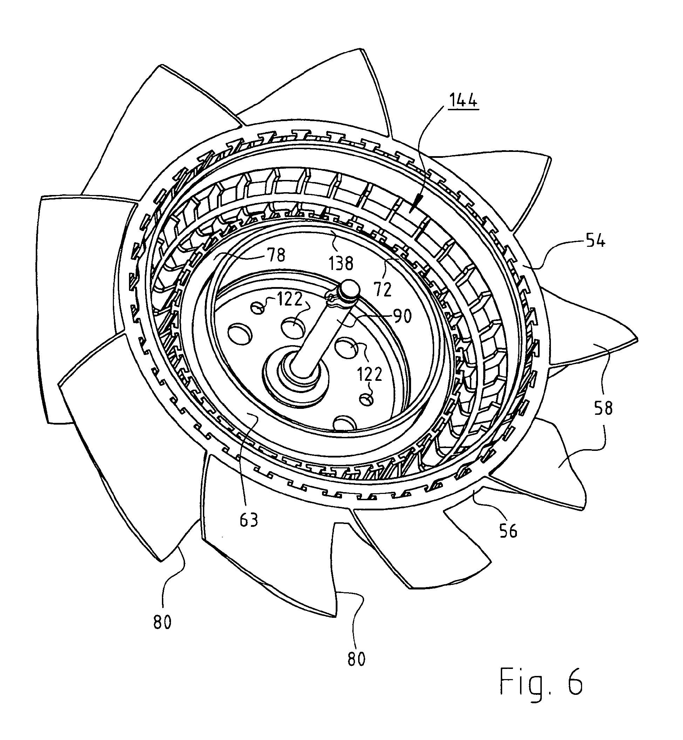

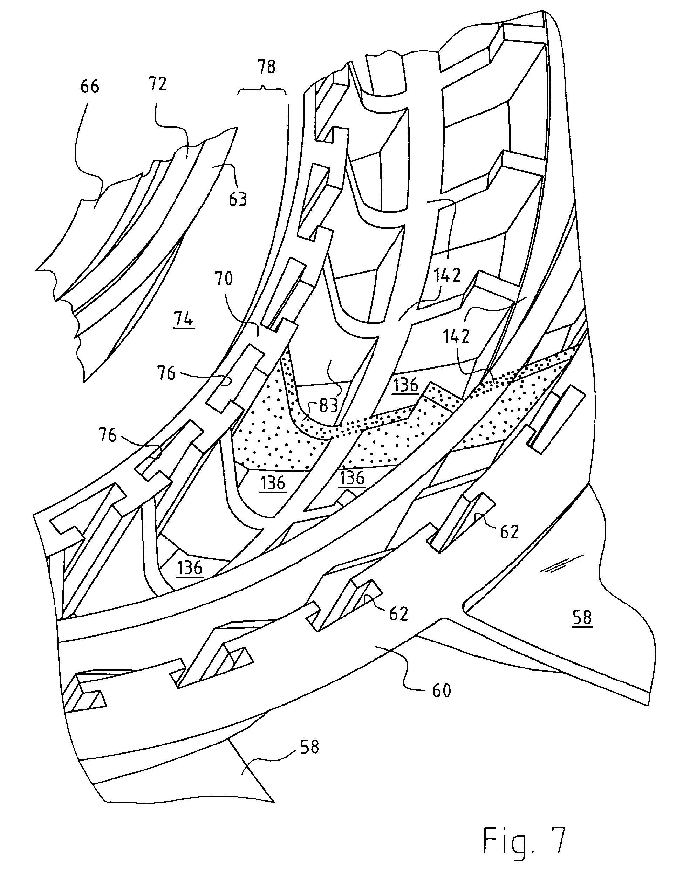

Die ersten Rippen 130 haben Winkelabstände von etwa 5° bis etwa 20°. Wie Fig. 6 und Fig. 7 zeigen, ist die Form der Rippen 130 an die Form des Hohlraums 144 im Inneren des Laufrads 44 angepasst, durch den sich die Rippen 130 erstrecken. Man kann auch sagen, dass die Form der ersten Rippen 130 der Form des Innenraums 144 folgt. Die Zahl der zweiten Rippen 132, 134 richtet sich u.a. nach den Platzverhältnissen, also nach Größe und Leistung des Diagonalventilators 40.

Durch die Ausbildung der Rippen 130, 132, 134 ergibt sich also ohne wesentliche Mehrkosten eine Verbesserung der Leistung des Diagonalventilators 40, da die Wirbelbildung im Inneren des Laufrads 66 stark reduziert wird.

Naturgemäß sind im Rahmen der vorliegenden Erfindung vielfache Abwandlungen und Modifikationen möglich.

Bevorzugt sind die ersten Rippen 130 auf ihrer dem Innenraum 144 des Laufrads 43 zugewandten Seite mit diesem Innenraum 144 fest verbunden.

Bevorzugt weist das ferromagnetische Rückschlussteil 53 als verbreiterten Bereich 67 einen etwa radial nach außen abstehenden Bereich auf, welcher zur Abstützung des ferromagnetischen Rückschlussteils 53 am des Laufrad 43 geeignet ist.

Bevorzugt sind die nach innen ragenden Vorsprünge 71 als runde, flache Bereiche 71 mit einem Durchmesser ausgebildet, der zwischen 3 mm und 10 mm liegt

Bevorzugt ist das Laufrad 43 aus Kunststoff ausgebildet,
und der verbreiterte Bereich 67 des rohrförmigen ferromagnetischen Rückschlussteils 63 ist bevorzugt mindestens bereichsweise in dem Kunststoff des Laufrads 43 befestigt.

## Patentansprüche

1. Diagonalventilator, welcher aufweist:
Einen Luftkanal (50), der einen Lufteinlass (44) und einen Luftauslass (52) sowie eine äußere Wand (48) und eine innere Wand (56) aufweist;
einen Außenläufermotor (75) mit einem Innenstator (100) und einem Außenrotor (72);
ein Laufrad (43), das mit Flügeln (58) versehen ist, welche an einer mit dem Außenrotor (72) in Antriebsverbindung stehenden Tragestruktur (54) angeordnet sind, welch letztere die innere Wand (56) des Luftkanals (50) bildet, in welchen Luftkanal (50) sich die Flügel (58) des Laufrads (43) erstrecken;
erste Auswuchttaschen (62), welche von der Druckseite (52) des Laufrads (43) zugänglich sind und auf der Innenseite des Laufrads (43) in einer ersten Ebene (P1) angeordnet sind;
und zweite Auswuchttaschen (76), welche auf der Innenseite des Laufrads (43) in einer zweiten Ebene (P2) angeordnet sind und ebenfalls von der Druckseite (52) des Laufrads (43) zugänglich sind,
wobei die erste Ebene (P1) näher zum Luftauslass (52) angeordnet ist als die zweite Ebene (P2).

2. Diagonalventilator nach Anspruch 1, bei welchem
erste Rippen (130) vorgesehen sind, welche sich jeweils von einem Abschnitt des Laufrads (43), der zwischen den ersten Auswuchttaschen (76) liegt, zu einem Abschnitt des Laufrads (43) erstrecken, der zwischen den zweiten Auswuchttaschen (62) liegt;
und mindestens eine in Umfangsrichtung verlaufende zweite Rippe (132, 134), welche mindestens einen Teil der ersten Rippen (130) an mindestens einem Abschnitt (142) miteinander verbindet, der radial zwischen den ersten Auswuchttaschen (76) und den zweiten Auswuchttaschen 62) liegt.

3. Diagonalventilator nach Anspruch 2, bei welchem die ersten Rippen (130) im Laufrad (43) in Winkelabständen angeordnet sind, die im Bereich von 5° bis 20° liegen.

4. Diagonalventilator nach einem der vorhergehenden Ansprüche, bei welchem im Laufrad (43) in einem Bereich innerhalb der zweiten Auswuchttaschen (62) ein topfartiges ferromagnetisches Teil (72) befestigt ist, welches einen magnetischen Rückschluss für einen in diesem topfartigen ferromagnetischen Teil (72) angeordneten Dauermagneten (138) bildet.

5. Diagonalventilator nach Anspruch 4, bei welchem am Boden dieses topfartigen Teils die Welle (90) des Außenrotors (72) befestigt ist.

6. Diagonalventilator nach Anspruch 4 oder 5, bei welchem auf der dem Lufteinlass (44) zugewandten Seite des topfartigen Teils ein scheibenförmiges Radiallüfterrad (120) befestigt ist, welches dazu ausgebildet ist, Kühlluft durch den Außenläufermotor (75) zu saugen und diesen Motor dadurch zu kühlen, wenn sich der Außenrotor (72) im Betrieb dreht.

7. Diagonalventilator nach Anspruch 6, bei welchem im Boden (77) des topfartigen Teils (72) mindestens eine Durchbrechung (122) vorgesehen ist, welche ein Ansaugen der Kühlluft durch das scheibenförmige Radiallüfterrad (120) ermöglicht.

8. Diagonalventilator nach einem der vorhergehenden Ansprüche, bei welchem der Außenrotor (72) ein rohrförmiges ferromagnetisches Rückschlussteil (63) aufweist, das im Bereich eines seiner Enden einen verbreiterten Bereich (67) aufweist, der in einem zentralen Teil des Laufrads (43) auf dessen Einlassseite (44) befestigt ist, wobei das rohrförmige ferromagnetische Rückschlussteil (63) im Laufrad (43) einen zentralen Hohlraum (68) definiert;
wobei der Diagonalventilator ein topfartiges ferromagnetisches Rückschlussteil (72) mit einem etwa zylindrischen Rand (73) und einem Boden (77) aufweist, welches topfartige Rückschlussteil (72) in dem durch das rohrförmige ferromagnetische Rückschlussteil (53) definierten zentralen Hohlraum (68) befestigt ist und an dessen Innenseite eine Permanentmagnetanordnung (66) des Außenläufermotors (75) in der Weise befestigt ist, dass diese Permanentmagnetanordnung (66) im Betrieb mit dem Innenstator (100) in Wechselwirkung steht, wobei der verbreiterte Bereich (67) des rohrförmigen ferromagnetischen Rückschlussteils (53) von der Außenseite des Laufrads (43) mindestens bereichsweise zugänglich ist, um bei der Befestigung des topfartigen ferromagnetischen Rückschlussteils (52) diesen zugänglichen Bereich (67) von der Außenseite des Laufrads (43) her abstützen zu können.

9. Diagonalventilator nach Anspruch 8, bei welchem das topfartige ferromagnetische Rückschlussteil (72) und das rohrförmige ferromagnetische Rückschlussteil (53) durch einen Presssitz miteinander verbunden sind und zusammen einen ferromagnetischen Rückschluss für den Außenläufermotor (75) bilden.

10. Diagonalventilator nach Anspruch 8 oder 9, bei welchem die dem topfartigen ferromagnetischen Rückschlussteil (72) zugewandte Innenseite (70) des rohrförmigen ferromagnetischen Rückschlussteils (53) mit nach innen ragenden Vorsprüngen (71) versehen ist, welche bei der Befestigung des topfartigen ferromagnetischen Rückschlussteils (72) mit letzterem einen Presssitz bilden.

11. Diagonalventilator nach Anspruch 8 oder 9, bei welchem im Laufrad (43) sich das rohrförmige ferromagnetische Rückschlussteil (63) radial innerhalb von Auswuchttaschen (62) und bevorzugt mit radialem Abstand von diesen erstreckt, welche Auswuchttaschen auf der Innenseite des Laufrads (43) vorgesehen sind.
